Europäisches Patentamt

European Patent Office

Office européen des brevets

(19)

(11) **EP 0 526 131 B1**

(12) **EUROPEAN PATENT SPECIFICATION**

(45) Date of publication and mention
of the grant of the patent:
**21.01.1998 Bulletin 1998/04**

(51) Int Cl.⁶: **G01N 15/14**

(21) Application number: **92306808.4**

(22) Date of filing: **24.07.1992**

(54) **Apparatus for forming a flattened sample flow for particle analysis**

Gerät zur Bildung eines flachen Probenflusses für die Teilchenanalyse

Appareil pour former un écoulement d'échantillon plat pour l'analyse de particules

(84) Designated Contracting States:
**DE FR GB IT**

(30) Priority: **26.07.1991 JP 210053/91**
**26.07.1991 JP 210054/91**

(43) Date of publication of application:
**03.02.1993 Bulletin 1993/05**

(73) Proprietor: **TOA MEDICAL ELECTRONICS CO., LTD.**
**Chuoku, Kobe (JP)**

(72) Inventor: **Ogino, Shinichi**
**Nishiku, Kobe (JP)**

(74) Representative: **Price, Paul Anthony King**
**D. Young & Co.,**
**21 New Fetter Lane**
**London EC4A 1DA (GB)**

(56) References cited:
**EP-A- 0 286 088          EP-A- 0 288 029**
**WO-A-87/06697          GB-A- 2 167 880**
**US-A- 3 893 766          US-A- 4 343 551**
**US-A- 4 352 558          US-A- 4 988 619**
**US-A- 5 088 816**

• **THE JOURNAL OF HISTOCHEMISTRY AND
CYTOCHEMISTRY vol. 25, no. 7, 1977, U.S.A
pages 774 - 780 V. KACHEL ET AL. 'Uniform
lateral orientation, caused by flow forces, of flat
particles in flow-through systems'**

## Description

The invention relates to apparatus for forming a flattened flow of a sample containing particle components (e.g. a liquid specimen of blood or urine). The apparatus of the invention is preferably used in particle analysis apparatus which uses strobe light to produce still images of particle components in the flattened sample flow.

Apparatus for taking images of particle components in a flat flow and analyzing the particles by image processing is disclosed in Japanese Laid-open Patent Sho. 57-500995 or United States Patent No. 4,338,024. The flow cell has a passage with a large aspect ratio (ratio of length to width) in the measuring region, forms a flat sheath flow in the passage, and takes still images of the flat sample flow with a video camera. The passage dimensions in the imaging region are 100 μm in width and 5000 μm in length (the aspect ratio is 50 times). The sheath flow is a flow in which the sample containing the suspension of particles is surrounded by a laminar sheath liquid in order to arrange the particles in a line along the central part of the liquid flow.

Japanese Laid-open Utility Model Hei. 3-44626 discloses a nozzle having a plurality of discharge holes, and a nozzle having an elongate discharge hole, for use in measuring the cleanliness of a cleanroom used in the manufacture of semiconductors or the like. These nozzles are intended to flatten the sample flow, but a sheath flow is not used, and they are merely intended to pass a large volume of liquid specimen. With these nozzles alone, it is not possible to produce a very flat flow (e.g. about 10 μm x 900 μm).

In United States Patent No. 4,988,619, fins extend across the flow chamber, and cylindrical rods also extend across the flow chamber. These are, however, intended to enhance the orientation (alignment of direction) of flat particles in the flow cytometer, and it is not possible to produce a very flat flow (e.g. about 10 μm x 900 μm).

In the conventional flow cell disclosed in Japanese Laid-open Patent Sho. 57-500995 or United States Patent No. 4,338,024, the thickness of the passage is about the size of the particles to be analyzed, and the dimensions are also required to be precise. Accordingly it was difficult to manufacture and was expensive. Also, because of the small thickness, the flow cell was easily broken and difficult to handle.

In an ordinary flow cytometer, a flow cell with an aspect ratio of the measuring passage of about 1 is used. Using such a flow cell, the above problems are avoided, but a flat sample flow is not produced. Besides, in the apparatus disclosed in Japanese Laid-open Utility Model Hei. 3-44626 or United States Patent No. 4,988,619, a sufficiently flat flow cannot be formed.

In the Flow Cytometry Handbook, Science Forum (1984), pp. 399-400, the force acting on the sample flow is mentioned. Fig. 1 is a diagram reprinted from this publication, showing a section through the flow in the flow cell. Comparing the h and v directions, the force fh (in the h direction having a larger throttling ratio) acts more than the force fv (in the v direction having a smaller throttling ratio). This is used for arranging the direction of cells in the sample in a specific direction. and it is insufficient for forming a flat sample flow. Meanwhile, supposing the forces acting on the sample flow to be fh, fv, they are expressed as fh:fv = A/a:B/b, with A/a > B/b.

Apparatus as defined in the preambles of claims 1 and 3 is disclosed in US-A-3893766. Various documents show measuring passages which are either of circular cross-section or of rectangular cross-section with a side ratio in the range from one to ten, see e.g. EP-A-0288029. EP-A-0286088 or The Journal of Histochemistry and Cytochemistry vol. 25, no. 7, 1977, U.S.A., pages 774-780.

First and second aspects of the present invention are defined in independent claims 1 and 3.

In the lead-in passage, since only one direction is narrowed in width, the sheath liquid flows inwards only in that direction, and a large force compresses the sample flow in that direction. In the other, perpendicular width direction, such a compressive force does not act. That is, the sample throttling (narrowing down) action occurs only in one direction.

Accordingly, the sample liquid discharged from the nozzle is formed into an extremely flat sample flow by the synergistic action of (i) the sample throttling action in one direction only and (ii) the already flat flow discharged from the nozzle, even in the measuring passage of which the aspect ratio is one or close to one. The flat flow that exits from the nozzle is produced by an elongate discharge port or a row of discharge ports, e.g. circular discharge ports.

Third to sixth aspects of the present invention are defined in independent claims 7, 9, 13 and 14.

The sheath liquid is divided into two flows by the sheath liquid dividing means which extends transversely of the lead-in passage. When the two sheath liquid flows converge (confluence), the sample liquid discharged from the discharge port(s) of the sample nozzle is sandwiched, so that a flat sample flow is formed. Because the discharge port of the sample nozzle is elongate or a row of discharge ports is used, the sample flow is made still flatter.

The invention will now be described by way of non-limiting embodiments with reference to the accompanying drawings, in which:-

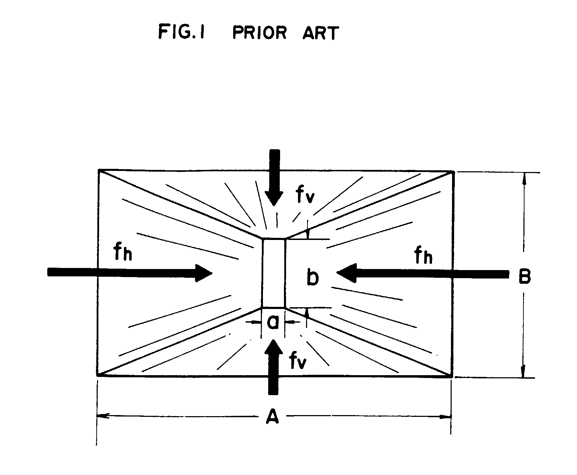

Fig. 1 is an explanatory sectional view showing the forces acting on the sample flow in a conventional flow cell;

Fig. 2 is a front sectional view showing a first embodiment of apparatus for forming a flattened sample flow for particle analysis in accordance with the invention;

Fig. 3 is a right side sectional view of the apparatus shown in Fig. 2;

Fig. 4 is a plan view of the apparatus shown in Fig. 2;
Fig. 5 is a perspective view showing an example of a sample nozzle used in the apparatus of the invention;
Fig. 6 is a longitudinal view showing the elongate discharge port of the nozzle shown in Fig. 5;
Fig. 7 is a side view of the nozzle shown of Fig. 5;
Fig. 8 is a right end view of the nozzle shown in Fig. 6;
Fig. 9 is a left end view of the nozzle shown in Fig. 6;
Fig. 10 is an explanatory diagram showing a modification of the discharge port of the nozzle shown in Fig. 9;
Fig. 11 is a perspective view showing another example of a sample nozzle used in the apparatus of the invention;
Fig. 12 is a longitudinal sectional view showing the row of discharge ports of the nozzle shown in Fig. 11;
Fig. 13 is a partially cut-away side view of the nozzle shown in Fig. 11;
Fig. 14 is a right end view of the nozzle shown in Fig. 12;
Fig. 15 is a left end view of the nozzle shown in Fig. 12;
Fig. 16 is a front sectional view showing a second embodiment of apparatus for forming a flattened sample flow for particle analysis in accordance with the invention;
Fig. 17 is a right side sectional view of the apparatus shown in Fig. 16;
Fig. 18 is a perspective view of the apparatus shown in Fig. 16;
Fig. 19 is an explanatory diagram showing flow velocity distribution in the conventional sheath flow portion without sheath liquid dividing means (and in the sheath flow stabilizing portion of the apparatus of Fig.16);
Fig. 20 is an explanatory diagram showing the flow velocity distribution in the sheath liquid dividing portion of the apparatus of Fig. 16;
Fig. 21 is an explanatory diagram showing the flow velocity distribution in the sheath liquid converging portion of the apparatus of Fig. 16;
Fig. 22 is an explanatory diagram showing the direction of forces applied by the sheath flow to the sample flow in the conventional flow cell, being a sectional view through the sheath flow;
Fig. 23 is an explanatory diagram showing the direction of forces applied by the sheath flow to the sample flow in the flow cell of Fig. 16, being a sectional view through the sheath flow;
Fig. 24 is a front sectional view showing a third embodiment of apparatus in accordance with the invention;
Fig. 25 is a right sectional view of the apparatus shown in Fig. 24;
Fig. 26 is a perspective view of the apparatus shown in Fig. 24;
Fig. 27 is a magnified view showing an example of the sample nozzle shown in Fig. 24;
Fig. 28 is a bottom view of the sample nozzle shown in Fig. 27;
Fig. 29 is a sectional view along the line D-D of Fig. 27;
Fig. 30 is a magnified view showing another example of the sample nozzle shown in Fig. 24;
Fig. 31 is a bottom view of the sample nozzle shown in Fig. 30; and
Fig. 32 is a sectional view along the line E-E of Fig. 30.

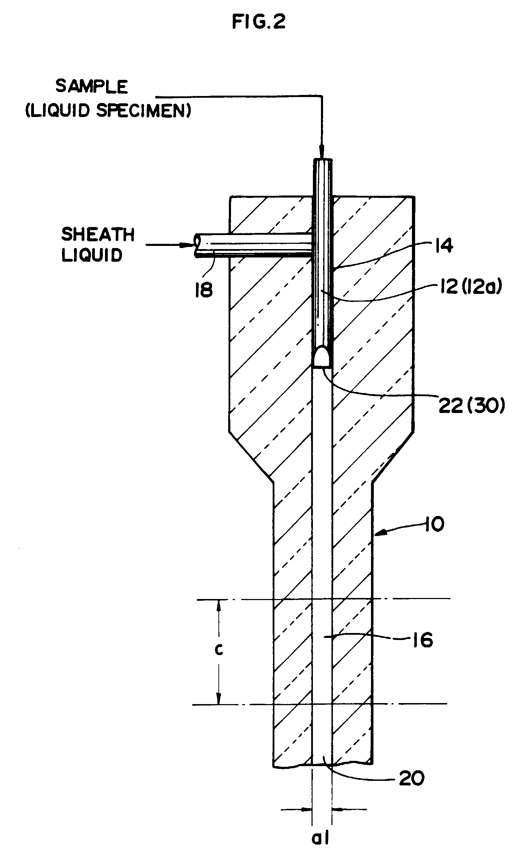

Fig. 2 to Fig. 4 relate to a first embodiment of apparatus for forming a flattened sample flow in accordance with the invention. The apparatus comprises a flow cell 10 for forming a sheath flow and a sample nozzle 12 which is a thin pipe for discharging the sample.

The flow cell 10 is made of transparent material such as glass or plastic, and comprises a lead-in passage 14 gradually narrowed in width in one direction only, a narrow measuring passage 16 contiguous to the lead-in passage 14, sheath liquid feed ports 18 disposed in the lead-in passage 14, and a discharge port 20 disposed at the downstream side of the measuring passage 16. The cross section of the measuring passage 16 is rectangular, with a side ratio of one to ten times, or preferably three to five times.

In this apparatus, the sheath liquid for carrying the sample into the measuring range c while forming a sheath therearound is passed into the flow cell 10, and at the same time the sample is passed into the sheath liquid from the nozzle 12, so that the thickness of the sample flow is reduced (throttled) to a specific value (about the thickness of the particles to be measured, for example, about 10 μm when measuring erythrocytes in a blood sample).

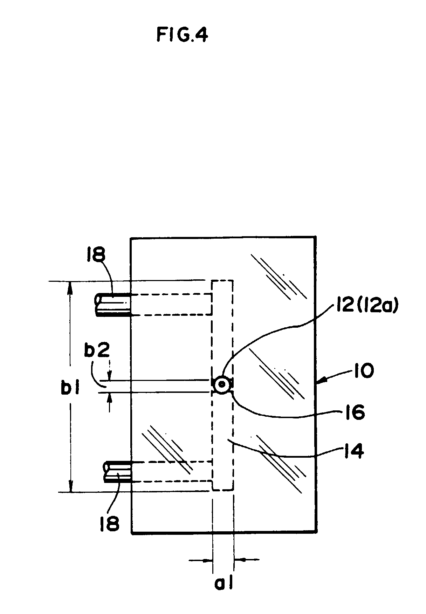

The width al of one side of lead-in passage 14 (see Fig. 2, Fig. 4) is constant, for example, at 1 mm, so that the width of the sheath liquid flow does not change near the front end of the nozzle 12, and the throttling action does not act on the sample flow in the direction of the width al.

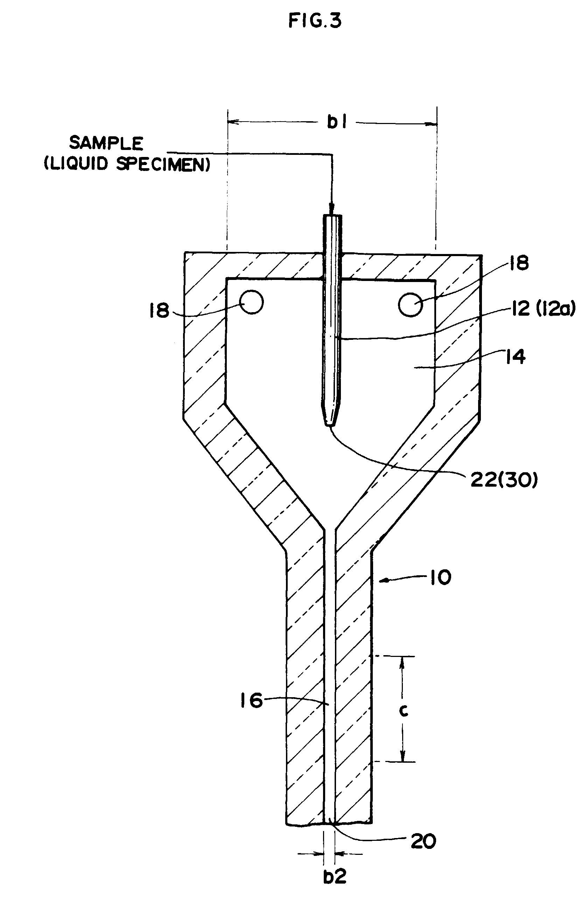

On the other hand, the width bl of the other side of the lead-in passage 14 (see Fig. 3, Fig. 4) is different from width a1 and gradually narrows as it approaches the measuring passage 16 to finally be width b2 (see Fig. 3, Fig. 4), so that the sample flow reducing action occurs. The width b1 is, for example, 10 mm, and the width b2 is, for example, 0.5 mm.

By disposing a conventional circular hole nozzle in the flow cell 10, the sample flow may be squashed into a sheet or board, that is, a wide sample flow with a thickness of about 10 μm may be formed. With this method, however, a sample flow having a sufficient width for the measuring range of an imaging flow cytometer cannot be prepared.

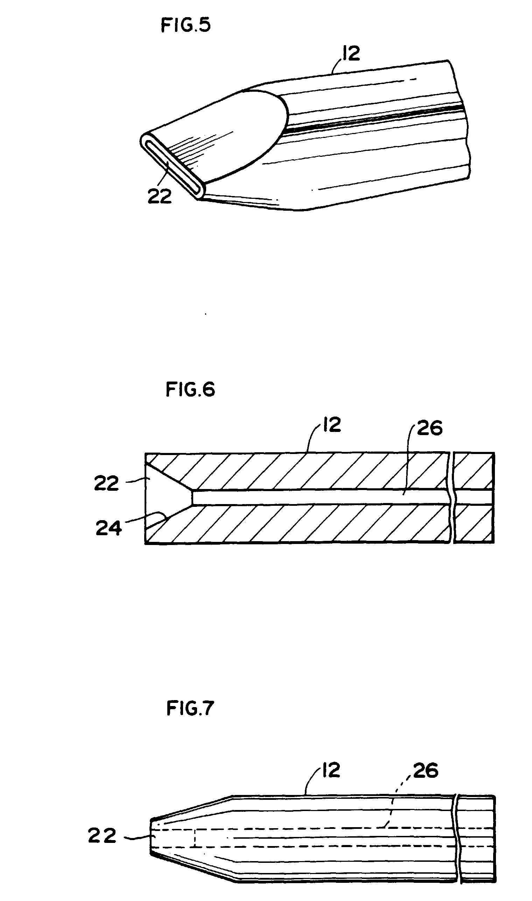

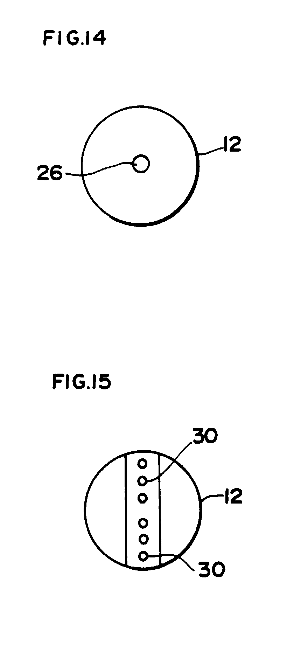

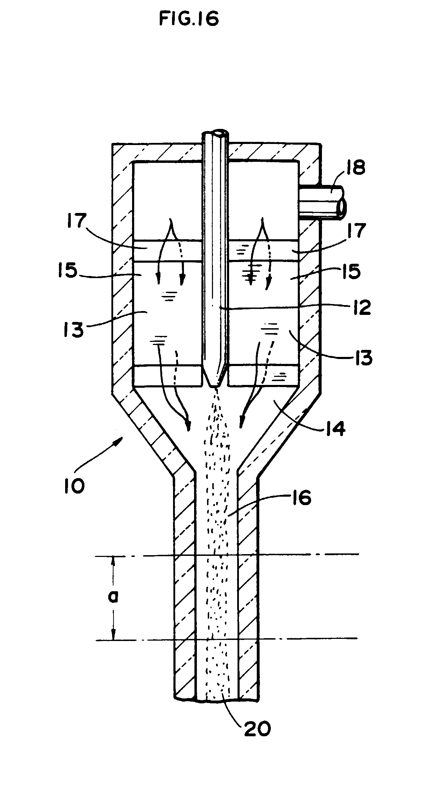

Accordingly, by using the sample nozzles as shown in Fig. 5 to Fig. 15, the thickness of the sample flow flowing in the measuring passage 16 of the flow cell 10 may be further reduced to form a flat flow. This is described in detail below.

The imaging region is basically determined by the scale factor (magnification) of the objective lens (not shown) and the size of the image pickup device of the video camera (not shown). For example, in the case of an objective lens with a scale factor of 10 times and a video camera CCD image pickup device of 2/3 inch, since the size of the light receiving surface of the CCD element is 8.8 x 6.6 mm, the imaging region in the flow cell 10 is 0.88 x 0.66 mm. When the objective lens has a scale factor of 40 times, the imaging region is 0.22 x 0.165 mm. Therefore, if the scale factor of the objective lens is 10 times, the width of the sample flow may be sufficient if it is approximately 0.9 mm.

In the sheath flow measuring method, the sectional area of the sample flow in the flow cell is determined by the flow rate ratio of the sample flow and sheath liquid flow. For example, using a conventional circular hole nozzle having only one sample flow outlet as the nozzle, if the sample discharge per unit time is 2.6 $\mu$l/sec and the flow rate of sheath liquid is 500 $\mu$l/sec, in the section of the measuring passage 16 of the flow cell, the area ratio occupied by the sample flow and sheath liquid is 1:187. Accordingly, as shown in Fig. 2 to Fig. 4, supposing the sectional area of the measuring passage 16 to be 1 mm x 0.5 mm, the area occupied by the sample flow is 1/187 of 0.5 mm$^2$, that is, 2.7 x 10$^{-3}$ mm$^2$.

Suppose the sample flow can be reduced to 1/20 in one direction only. The value of 1/20 is determined by the shape of the flow cell.

With the conventional circular opening nozzle, if the diameter of the sample flow right after being discharged therefrom is, for example, 0.2 mm, the thickness of the sample flow in the measuring region c is 1/20, that is, reduced to 10 $\mu$m.

Comparing this result with the result of the area occupied by the sample flow in the measuring passage 16 mentioned above, the size of the region occupied by the sample is obtained as 0.01 mm x 0.27 mm. The width of the flat flow is 0.27 mm, which is found to be only about 1/3 of the desired imaging region width of 0.9 mm referred to above.

To solve this problem, it is possible

(a) to increase the sample discharge volume three times, or
to increase the opening area of sample discharge port three times (without changing the flow rate).

However, the plan (a) has the following problems. That is, the area occupied by the sample flow in the measuring passage 16 is increased three times from the initial area. On the other hand, the diameter of the sample flow right after discharge from the nozzle is $\sqrt{3}$ times

the initial value (three times in area). Hence, if reduced to 1/20, the thickness of the sample flow is $\sqrt{3}$ times of the initial value. Accordingly, the width of the sample flow is 3/$\sqrt{3} = \sqrt{3}$ times the initial value. Thus, both the thickness and width of the sample flow are increased by $\sqrt{3}$, and therefore the width cannot be increased three times whilst keeping the initial thickness.

In the case of plan (b), the following problems are present. That is, the area occupied by the sample flow in the measuring passage 16 is unchanged. The opening area of the nozzle discharge port is 3 times bigger ($\sqrt{3}$ times bigger in diameter), and hence the diameter of sample flow right after discharge is $\sqrt{3}$ times the initial value. Hence the thickness of the flattened sample flow is $\sqrt{3}$ greater, but the width of the flattened sample flow is actually 1/$\sqrt{3}$ times the previous value.

In plan (a), moreover, it is possible at the same time to increase the sheath liquid flow rate three times, but it involves the following problems. That is, the area occupied by the sample flow returns to the original value, and therefore the thickness and the width of the sample flow also return to their original values of 0.01 mm and 0.27 mm.

Combinations of varying the sample discharge volume, sample discharge opening, and sheath liquid flow rate may be considered, but in any case it is not possible to obtain sufficient flatness.

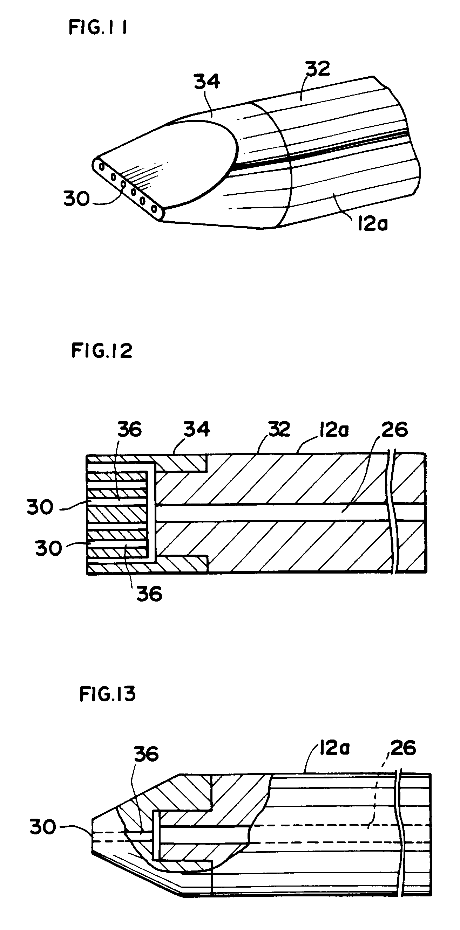

To solve the above problems, the embodiments of the invention enhance the flatness of the sample flow further, by using a flattened circular (elongate or nearly elliptical) sample discharge port as shown in Fig. 5 to Fig. 10, or a sample nozzle having multiple sample discharge ports arranged in a row as shown in Fig. 11 to Fig. 15.

As mentioned above, if the passage reduction factor is 1/20 th, the diameter of the discharge aperture of the nozzle front end is 0.2 mm, the flow rate of sheath liquid per unit time is 500 $\mu$l/sec, and the sample flow rate is 2.6 $\mu$l/sec, the sectional area of the sample flow in the measuring region is 10 $\mu$m x 270 $\mu$m. For the sample to fill the entire imaging region, it is necessary to increase the sample flow rate by at least 3.3 times, that is, to more than 8.6 $\mu$l/sec.

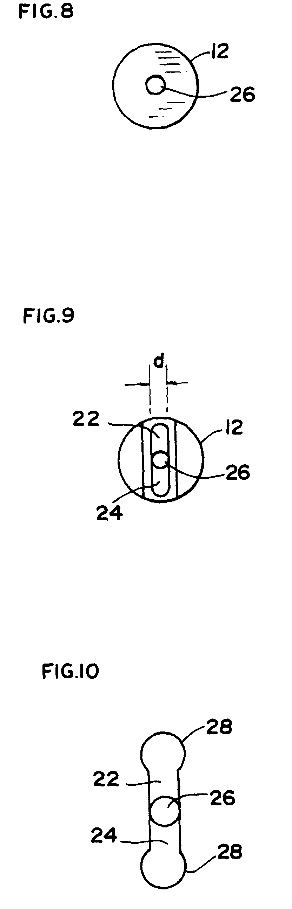

In the sample nozzle 12 shown in Fig. 5 to Fig. 9, the length d (see Fig. 9) in the thickness direction of the sample discharge port 22 at the nozzle front end is, for example, kept at 0.2 mm, and the width of the discharge port 22 is, for example, 0.66 mm (i.e. 3.3 times greater than the thickness).

In Fig. 5 to Fig. 9, for example, a flare 24 leads to the front end of the nozzle 12, and a nearly elliptical discharge port 22 is formed, but it does not matter if a step arrangement is provided instead of the flare arrangement. Numeral 26 denotes a sample flow inlet.

As shown in Fig. 9, supposing the central part of the nearly elliptical discharge port 22 and the sample flow inlet 26 to be present on the same straight line, it is hard to divide the flow uniformly, and therefore it is desired to shape the discharge port as shown in Fig. 10, that is, the width of the end portion 28 should be slightly broader than the width of the central part.

In Fig. 11 to Fig. 15, another example of sample nozzle is shown. For the sample nozzle 12a, for example, the flow rate per unit time is increased 3.3 times by arranging several holes of 0.2 mm in a row, and a sample flow of 10 μm x 270 μm is formed per hole, so that it is enough to form three or more holes of 0.22 mm with a maximum pitch of 0.27 mm. However, as shown in Fig. 12, when multiple holes are arranged in a comb form, if there are discharge ports on the same straight line as the original sample flow inlet 26, it is hard to divide the flow uniformly, and therefore it is desired to dispose four or six small discharge ports 30 symmetrically about the original sample flow inlet 26. Moreover, in order to make uniform the flow rate from each small discharge port 30, the central holes may be smaller (for example, 0.15 mm), and the outside holes larger (for example, 0.25 mm). However, the number of holes in the nozzle front end, and the hole diameters, may be varied to produce the best result.

In Fig. 12, the sample nozzle 12a is, for example, composed of a main body member 32 and a front end member 34. The main body member 32 has one sample flow inlet 26, and the front end member 34 has, for example, six small passages 36 arranged horizontally in one row. The main body member 32 and front end member 34 are bonded so that the passages may mutually communicate and the members form one body.

In order to dispose plural small discharge ports at the front end of the sample nozzle, apart from the above construction, it is also possible to insert plural small pipes into the nearly elliptical discharge port 22 shown in Fig. 5, or install plural partitions in the discharge port 22. The shape of the small discharge ports may be other than a circle, e.g. a quadrangle, polygon or other shape.

The sample liquid discharged from the nozzle 12 is formed into an extremely flat sample flow by the synergistic action of the sample throttling action in one direction only and the flat flow discharged from the nozzle, even when the measuring passage 16 has an aspect ratio of one to ten times. Also in the case of a sample liquid discharged from plural small discharge ports 30 of the sample nozzle 12a, an extremely flat sample flow may be formed.

The embodiment of Fig. 2 to Fig. 15 brings about the following effects.

(1) Not only the lead-in passage is narrowed in one direction, but also the discharge port of the sample nozzle front end is elongate or has multiple holes, and therefore a flat sample flow may be easily formed in a rectangular passage with an aspect ratio of one to ten times or in a nearly circular measuring passage.

(2) Since the passage of the flow cell may be nearly a square or circle, it is easy to manufacture the flow cell, and its strength is enhanced. Hence, the manufacturing cost is reduced, and damage decreased.

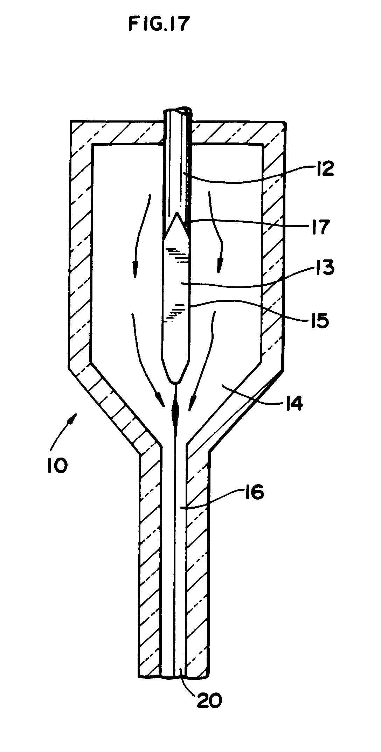

Fig. 16 to Fig. 18 relate to a second embodiment of apparatus for forming a flattened sample flow in accordance with the invention. This apparatus comprises a flow cell 10 for forming a sheath flow, a sample nozzle 12 which is a thin pipe for discharging the sample, and a sheath liquid dividing means 13 for dividing the sheath flow symmetrically into two flows.

The flow cell 10 is made of a transparent material such as glass, acrylic or other resin, and comprises a lead-in passage 14 which gradually narrows, a narrow measuring passage 16 contiguous to the lead-in passage 14, a sheath liquid feed port 18 disposed in the lead-in passage 14, and a discharge port 20 disposed at the downstream side of the measuring passage 16. Incidentally, symbol a denotes the measuring region. The cross section of the measuring passage 16 is rectangular, with a side ratio of one to ten times, or preferably three to five times.

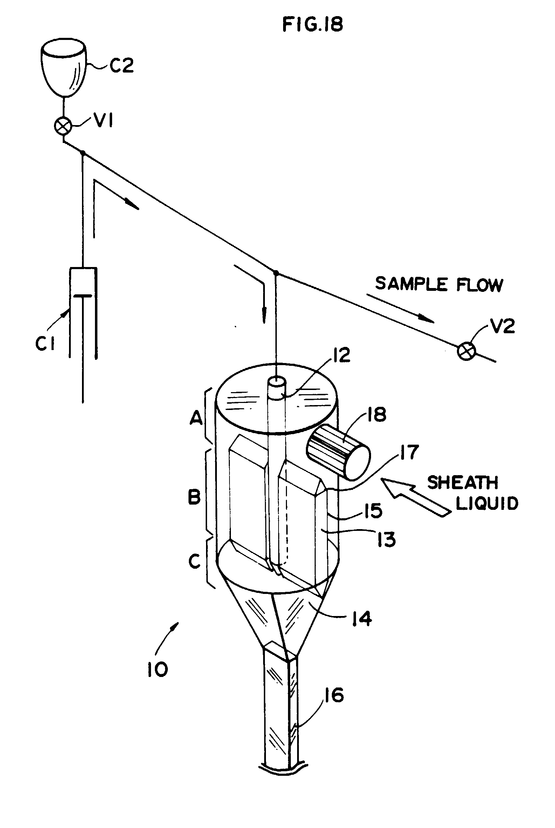

In Fig. 18, C1 is sample discharge means such as a syringe, C2 is a sample liquid tank, and V1, V2 are valves.

In measuring, first valves V1, V2 are opened, and the sample liquid is fed nearly to the nozzle 12. Next, the valves V1, V2 are closed, and the syringe C1 is operated, so that a specific volume of the sample is discharged from the nozzle 12.

The sheath liquid dividing means 13 is composed of, for example, a plate 15 contacting the sample nozzle 12 and projecting in the lateral direction, and a wedge part 17 formed on the upper part of the plate 15.

The sample nozzles as shown in Fig. 5 to Fig. 15 are used, so that the thickness of the sample flow in the measuring passage 16 of the flow cell 10 is made an even thinner flat flow. The longitudinal axis of the elongate sample discharge port 22 or the row of discharge ports 30 points in the same direction as the transversely extending sheath liquid dividing means 13.

In the flow cell 10, as shown in Fig. 18, there are parts for controlling the sheath liquid, that is, sheath flow stabilizing portion A, sheath flow dividing portion B, and sheath flow converging portion C.

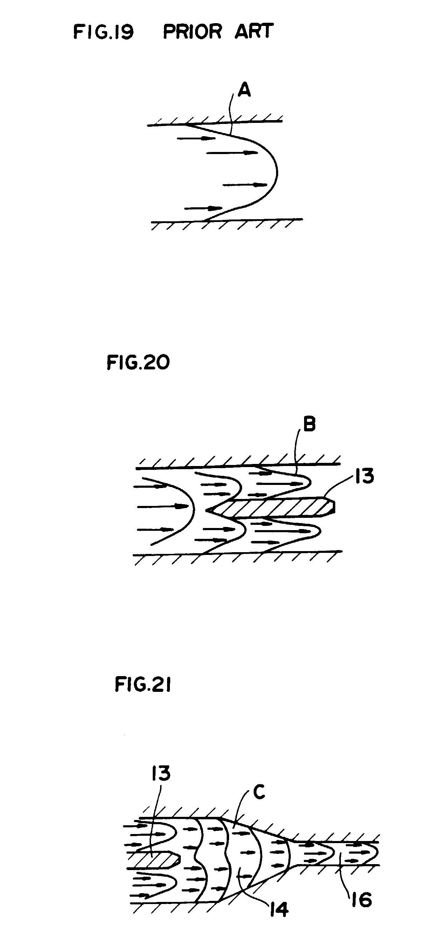

The sheath liquid flows in from the sheath liquid feed port 18 in the upper part of the flow cell, and is decelerated in the sheath flow stabilizing portion A to be formed into a laminar flow. For example, supposing the inside diameter of the sheath flow stabilizing portion A to be 10 mm, the flow velocity to be 6.3 mm/sec, the viscosity to be $\mu = 1.002$, and the density to be $\rho = 998$ kg/m$^3$, the Reynolds number Re is about 0.063, which satisfies the laminar flow condition. At this time, the flow velocity distribution is a parabolic profile as shown in Fig. 19.

Afterwards, the sheath flow is divided into two flat flows by the dividing portion B. In this dividing portion B, by forming an appropriate shape (for example, a wedge) on the front part of the sheath liquid dividing means 13, the sheath liquid is divided into two flat flows as shown in Fig. 20, while keeping the flow in a laminar state.

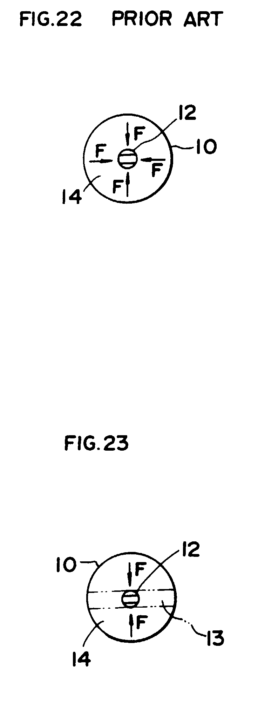

Later, at the rear portion of the sheath liquid dividing portion 13, by converging two flat flows, as shown in Fig. 21, the flow velocity profile is formed with three layers, in which the flow velocity is slow in the central portion, and fast at both sides. This flow runs into the measuring passage 16 as shown in Fig. 21, and changes into one flow having a parabolic flow velocity profile.

Accordingly, by disposing the sample discharge port of the nozzle 12 at the rear portion of the sheath liquid dividing means 13, that is, where the flow velocity is the lowest, when the sample discharged, the sample forms a sandwiched flow between the two flat flows of the sheath liquid.

This sandwich flow is later compressed by the taper part of the lead-in passage 14, and runs into the measuring region while keeping the three-layer sandwich structure.

In the conventional method not utilizing the sheath liquid dividing means, as shown in Fig. 19, the flow velocity distribution is parabolic and rotationally symmetric with respect to the flow direction, and the sample discharged from the front end of the nozzle 12 receives a compressive pressure F from all perpendicular directions to the flow direction as shown in Fig. 22, and the flat flow gradually converges on one point.

By contrast, in the apparatus of Figs. 16 to 18 with its sheath liquid dividing means 13, the sample discharged from the front end of the nozzle 12 is sandwiched by two sheath liquid flat flows, and therefore receives the compressive force F only from the perpendicular directions (or lateral directions) shown in Fig. 23, so that a stable flat sheath flow may be obtained.

With the sheath liquid dividing means 13, the converging position of the two flat flows is determined automatically. Thus, if the front end of the nozzle 12 is put at a position slightly away from the flow direction, its effect on the thickness of the sample flow in the measuring region is small, and the front end position of the sheath liquid dividing means 13 becomes a guideline for mounting the nozzle, so that the nozzle may be mounted easily.

Thus, by forming the sheath flow stabilizing portion A and dividing portion B in the flow cell 10 and also the converging portion C for joining two flat flows, a stable flat sheath flow may be formed. Meanwhile, the sheath liquid dividing means 13 may be disposed in the lead-in passage 14 so as to nearly touch the sample nozzle 12, or may be directly mounted on the sample nozzle 12.

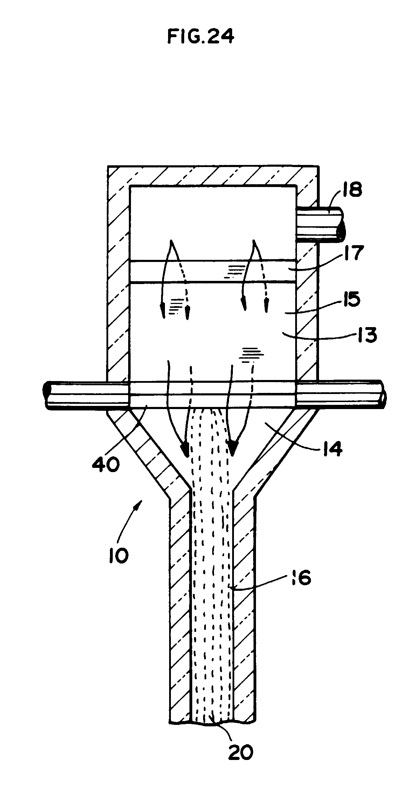

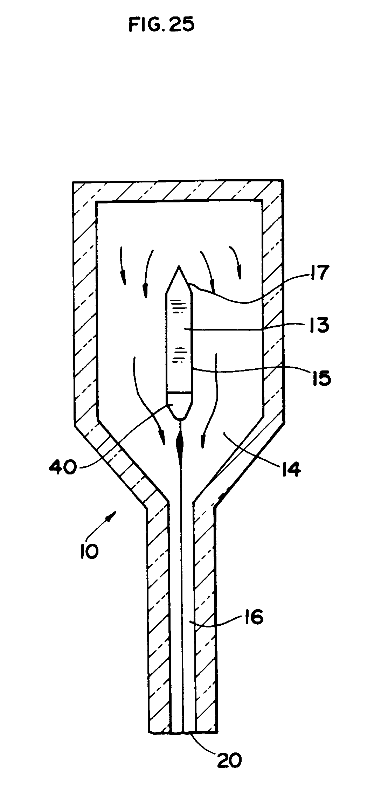

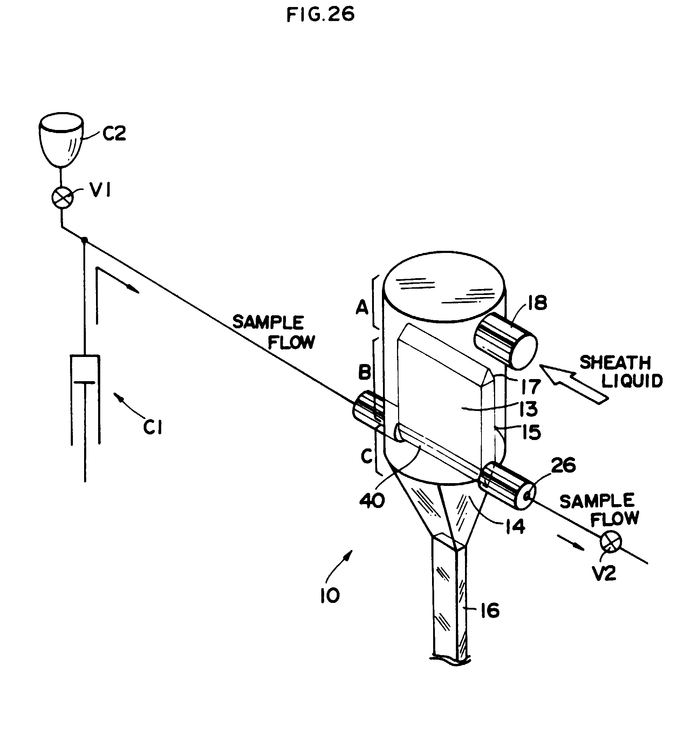

A third embodiment of the invention will be explained by referring to Fig. 24 to Fig. 32. In this embodiment, a sample nozzle 40 is disposed at the rear end of the sheath liquid dividing means 13, and the sample nozzle 40 is positioned across the flow direction of the sheath liquid. The method of forming a flat sheath flow is the same as in the second embodiment.

In the apparatus shown in Fig. 16 to Fig. 18, the sample liquid drawn in and held before the start of measurement is a long way from the discharge port of the nozzle. In other words, the distance from the branch point above the nozzle to the front end of the nozzle 12 is long. Thus, before the start of measurement, the inside of the nozzle is filled with a cleaning liquid, so that it is necessary to discharge a large volume of sample from the nozzle (about ten times the sample volume to be measured) until the concentration of sample discharged from the nozzle discharge port reaches a stable concentration (normal sample concentration). Accordingly, a waiting time of 5 to 10 seconds is necessary from the start of feeding sample into the nozzle until the measurement is actually started.

In the third embodiment, in order to shorten the distance from the drawn in and held sample liquid to the sample discharge port of the nozzle, the inside of the nozzle is filled with sample in the step before measurement. When the sample is discharged from the sample discharge port of the nozzle, the measurement is started at the same time.

In measuring, first valves V1, V2 are opened, and the sample liquid is fed into one end of the nozzle 40 and out of the other end. Next, the valves V1, V2 are closed, and the syringe C1 is operated, so that a specific volume of the sample is discharged from the nozzle 40.

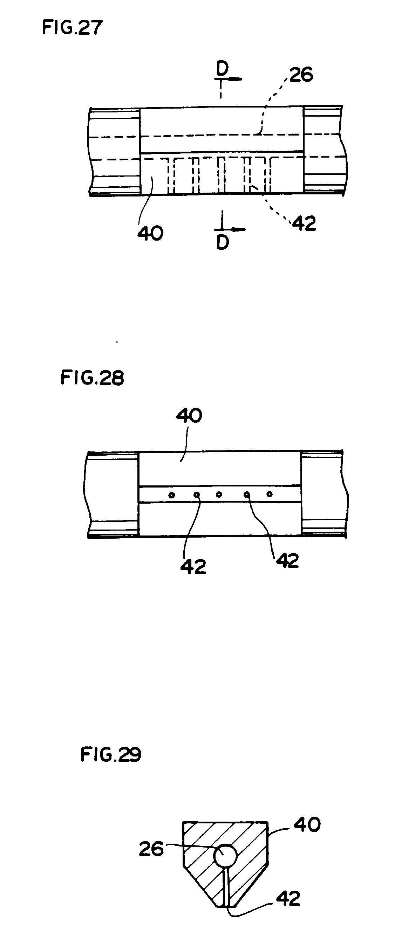

More specifically, as shown in Fig. 24 to Fig. 27, in the lead-in passage 14, the sample nozzle 40 is disposed across the flow of the sheath liquid. Along the lower surface of the sample nozzle 40, as shown in Fig. 27 to Fig. 29, a plurality of small discharge ports 42 are disposed which open towards the measuring passage 16. The small discharge ports 42 communicate with the sample flow inlet 26 of the sample nozzle.

At the upstream side of the small discharge ports 42 of the sample nozzle 40, the sheath liquid dividing means 13 projects in the lateral direction for dividing the sheath liquid symmetrically into two flows and is in contact with the sample nozzle 40. The lateral projecting direction of the sheath liquid dividing means 13 and the axial direction of the sample nozzle 40 are the same.

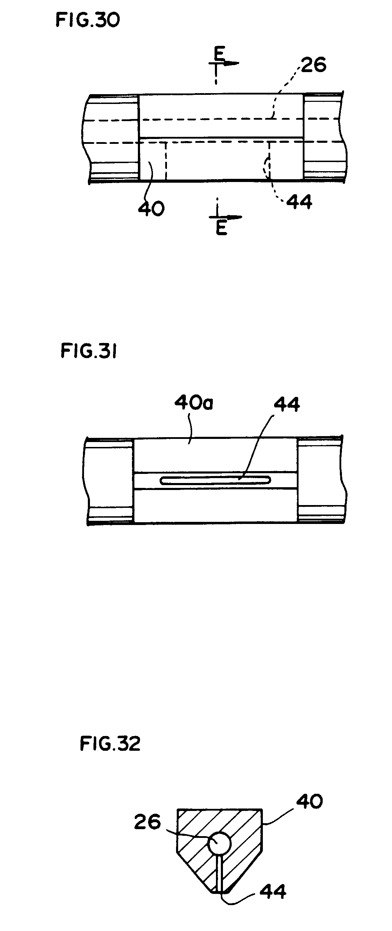

Moreover, instead of disposing a plurality of small discharge ports 42 in the sample nozzle 40, as shown in Fig. 30 to Fig. 32, an elongate discharge port 44 may be disposed in the sample nozzle 40.

The other constructional features and the mode of operation are the same as for the second embodiment.

The embodiments of Fig. 16 to Fig. 32 bring about the following effects.

(1) By using sheath liquid dividing means projecting in the lateral direction at the upstream side of the sample discharge port, and dividing the sheath liquid into two flows and joining the flows up again, the sample is enveloped with sheath liquid in a sandwich form, so that a flat sample flow may be formed without using a passage of a large aspect ratio as in the prior art. Thus the passage may be close to a square, and the manufacturing cost is reduced, and the risk of breakage is reduced.

(2) By flattening the discharge port of the sample nozzle or disposing a plurality of the discharge ports in a row, a more favourable flattened sample flow is formed.

(3) When disposing the sample nozzle across the lead-in passage, the route to the discharge port is made shorter, and hence the sample discharge preparation time is reduced. At the same time, contamination between samples may be decreased, and the volume of sample required may be reduced.

Having described preferred embodiments of the invention with reference to the accompanying drawings, it is to be understood that the invention is not limited to those precise embodiments, and that various changes and modifications may be made by one skilled in the art without departing from the scope of the invention as defined in the claims.

## Claims

1.  Apparatus for forming a flattened sample flow for particle analysis, comprising:

    a flow cell (10) having a lead-in passage (14) which gradually becomes narrower and leads into a measuring passage (16), a sheath liquid feed port (18) disposed in the lead-in passage (14), and a discharge port (20) disposed at the downstream side of the measuring passage (16); and
    a sample nozzle (12) for discharging a sample, the sample nozzle being disposed in the lead-in passage (14) of the flow cell so that its downstream end faces the measuring passage (16); wherein:
    the width of the lead-in passage (14) gradually narrows in only one direction;
    a sample discharge port (22) in the downstream end of the sample nozzle (12) is elongate; and
    the sample nozzle (12) is disposed so that the elongate discharge port (22) extends transversely of said one direction of the width of the lead-in passage (14);

    characterized in that the cross-section of the measuring passage (16) is substantially circular or is substantially rectangular with a side ratio in the range from one to ten.

2.  Apparatus according to claim 1, wherein the discharge port (22) of the sample nozzle (12) has a broader width at its end portions (28) than at its central portion.

3.  Apparatus for forming a flattened sample flow for particle analysis, comprising:

    a flow cell (10) having a lead-in passage (14) which gradually becomes narrower and leads into a measuring passage (16), a sheath liquid feed port (18) disposed in the lead-in passage (14), and a discharge port (20) disposed at the downstream side of the measuring passage (16); and
    a sample nozzle (12a) for discharging a sample, the sample nozzle being disposed in the lead-in passage (14) of the flow cell so that its downstream end faces the measuring passage (16);
    wherein:
    the width of the lead-in passage (14) gradually narrows in only one direction;
    a plurality of sample discharge ports (30) are disposed in a row in the downstream end of the sample nozzle (12a); and
    the sample nozzle (12a) is disposed so that the row of discharge ports (30) extends transversely of said one direction of the width of the lead-in passage (14);

    characterized in that the cross-section of the measuring passage (16) is substantially circular or is substantially rectangular with a side ratio in the range from one to ten.

4.  Apparatus according to claim 3, wherein the sample nozzle (12a) has a sample flow inlet (26) at its upstream end, and the sample flow inlet (26) branches into a plurality of passages (36) inside the sample nozzle, thereby forming the row of discharge ports (30).

5.  Apparatus according to claim 4, wherein the number of discharge ports (30) is an even number, and the discharge ports (30) are disposed symmetrically about the sample flow inlet (26).

6.  Apparatus according to claim 3, 4 or 5, wherein the diameters of the discharge ports (30) disposed at the ends of the row are greater than the diameters of the discharge ports (30) disposed at the centre of the row.

7.  Apparatus for forming a flattened sample flow for particle analysis, comprising:

    a flow cell (10) having a lead-in passage (14) which gradually becomes narrower and leads into a measuring passage (16), a sheath liquid feed port (18) disposed in the lead-in passage (14), and a discharge port (20) disposed at the downstream side of the measuring passage (16); and

a sample nozzle (12) for discharging a sample, the sample nozzle being disposed in the lead-in passage (14) of the flow cell so that its downstream end faces the measuring passage (16); wherein:

the cross-section of the measuring passage (16) is substantially circular or is substantially rectangular with a side ratio in the range from one to ten;

sheath liquid dividing means (13) extends transversely of the lead-in passage (14) for dividing the sheath liquid symmetrically into two flows and is disposed adjacent to the sample nozzle (12);

a sample discharge port (22) in the downstream end of the sample nozzle (12) is positioned in the sheath liquid converging region at the downstream side of the sheath liquid dividing means (13); and

the discharge port (22) of the sample nozzle (12) is elongate, and the sample nozzle (12) is disposed so that the direction of elongation of the discharge port (22) is substantially the same as the direction of transverse extension of the sheath liquid dividing means (13).

8. Apparatus according to claim 7, wherein the discharge port (22) of the sample nozzle has a broader width at its end portions (28) than at its central portion.

9. Apparatus for forming a flattened sample flow for particle analysis, comprising:

a flow cell (10) having a lead-in passage (14) which gradually becomes narrower and leads into a measuring passage (16), a sheath liquid feed port (18) disposed in the lead-in passage (14), and a discharge port (20) disposed at the downstream side of the measuring passage (16); and

a sample nozzle (12a) for discharging a sample, the sample nozzle being disposed in the lead-in passage (14) of the flow cell so that its downstream end faces the measuring passage (16);

wherein:

the cross-section of the measuring passage (16) is substantially circular or is substantially rectangular with a side ratio in the range from one to ten;

sheath liquid dividing means (13) extends transversely of the lead-in passage (14) for dividing the sheath liquid symmetrically into two flows and is disposed adjacent to the sample nozzle (12a);

a plurality of sample discharge ports (30) are disposed in a row in the downstream end of the sample nozzle (12a) and are positioned in the sheath liquid converging region at the downstream side of the sheath liquid dividing means (13); and

the sample nozzle (12a) is disposed so that the row of discharge ports (30) extends in substantially the same direction as the direction of transverse extension of the sheath liquid dividing means (13).

10. Apparatus according to claim 9, wherein the sample nozzle (12a) has a sample flow inlet (26) at its upstream end, and the sample flow inlet (26) branches into a plurality of passages (36) inside the sample nozzle, thereby forming the row of discharge ports (30).

11. Apparatus according to claim 10, wherein the number of discharge ports (30) is an even number, and the discharge ports (30) are disposed symmetrically about the sample flow inlet (26).

12. Apparatus according to claim 9, 10 or 11, wherein the diameters of the discharge ports (30) disposed at the ends of the row are greater than the diameters of the discharge ports (30) disposed at the centre of the row.

13. Apparatus for forming a flattened sample flow for particle analysis, comprising:

a flow cell (10) having a lead-in passage (14) which gradually becomes narrower and leads into a measuring passage (16), a sheath liquid feed port (18) disposed in the lead-in passage (14), and a discharge port (20) disposed at the downstream side of the measuring passage (16); and

a sample nozzle (40) for discharging a sample, the sample nozzle extending transversely of the lead-in passage (14) of the flow cell so that its downstream face faces the measuring passage (16);

wherein:

the cross-section of the measuring passage (16) is substantially circular or is substantially rectangular with a side ratio in the range from one to ten;

a plurality of sample discharge ports (42) are disposed in a row in the downstream face of the sample nozzle (40) with the row extending in the axial direction of the sample nozzle;

sheath liquid dividing means (13) extends transversely of the lead-in passage (14) and is disposed adjacent to the upstream face of the sample nozzle (40) so as to divide the sheath liquid symmetrically into two flows; and

the sheath liquid dividing means (13) is disposed so that the direction of transverse extension of the sheath liquid dividing means (13) is substantially the same as the axial direction of the sample nozzle (40).

14. Apparatus for forming a flattened sample flow for particle analysis, comprising:

a flow cell (10) having a lead-in passage (14) which gradually becomes narrower and leads into a measuring passage (16), a sheath liquid feed port (18) disposed in the lead-in passage (14), and a discharge port (20) disposed at the downstream side of the measuring passage (16); and
a sample nozzle (40) for discharging a sample, the sample nozzle extending transversely of the lead-in passage (14) of the flow cell so that its downstream face faces the measuring passage (16);
wherein:
the cross-section of the measuring passage (16) is substantially circular or is rectangular with a side ratio in the range from one to ten;
an elongate sample discharge port (44) is disposed in the downstream face of the sample nozzle (40) and extends in the axial direction of the sample nozzle;
sheath liquid dividing means (13) extends transversely of the lead-in passage (14) and is disposed adjacent to the upstream face of the sample nozzle (40) so as to divide the sheath liquid symmetrically into two flows; and
the sheath liquid dividing means (13) is disposed so that the direction of transverse extension of the sheath liquid dividing means (13) is substantially the same as the axial direction of the sample nozzle (40).

15. Apparatus according to claim 13 or 14, wherein a sample flow passage (26) passes axially through the sample nozzle (40) and communicates with the or each sample discharge port (42, 44).

**Patentansprüche**

1. Vorrichtung zur Bildung eines abgeflachten Probenflusses für Teilchenanalyse mit:

einer Strömungszelle (10) mit einem Einführungsdurchgang (14), welcher allmählich enger wird und in einen Meßdurchgang (16) führt, einer Hüllenflüssigkeitsbeschikkungsöffnung (18), die in dem Einführungsdurchgang (14) angeordnet ist, und einer Abgabeöffnung (20), die auf der Abstromseite des Meßdurchganges (16) angeordnet ist, und

einer Probendüse (12) zur Abgabe einer Probe, wobei die Probendüse in dem Einführungsdurchgang (14) für die Strömungszelle derart angeordnet ist, daß ihr Abstromende zu dem Meßdurchgang (16) hinblickt, wobei

die Breite des Einführungsdurchganges (14) nur in einer Richtung allmählich sich verengt,

eine Probenabgabeöffnung (22) in dem Abstromende der Probendüse (12) länglich ist und

die Probendüse (12) derart angeordnet ist, daß die längliche Abgabeöffnung (22) sich quer zu der einen Richtung der Breite des Einführungsdurchganges (14) erstreckt, **dadurch gekennzeichnet, daß** der Querschnitt des Meßdurchganges (16) im wesentlichen rund oder im wesentlichen rechteckig mit einem Seitenverhältnis im Bereich von 1 bis 10 ist.

2. Vorrichtung nach Anspruch 1, der die Abgabeöffnung (22) der Probendüse (12) eine größere Breite an ihren Endabschnitten (28) als an ihrem mittigen Abschnitt hat.

3. Vorrichtung zur Bildung eines abgeflachten Probenflusses für Teilchenanalyse mit

einer Strömungszelle (10) mit einem Einführungsdurchgang (14), der allmählich enger wird und in einen Meßdurchgang (16) führt, einer Hüllenflüssigkeitsbeschichtungsöffnung (18), die in dem Einführungsdurchgang (14) angeordnet ist, und einer Abgabeöffnung (20), die auf der Abstromseite des Meßdurchganges (16) angeordnet ist, und

einer Probendüse (12a) zur Abgabe einer Probe, wobei die Probendüse in dem Einführungsdurchgang (14) der Strömungszelle derart angeordnet ist, daß ihr Abstromende zu dem Meßdurchgang (16) hinblickt, wobei die Breite des Einführungsdurchganges (14) sich nur in einer Richtung allmählich verengt,

mehrere Probenabgabeöffnungen (30) in einer Reihe in dem Abstromende der Probendüse (12a) angeordnet sind und

die Probendüse (12a) derart angeordnet ist, daß die Reihe der Abgabeöffnungen (30) sich quer zu der einen Richtung der Breite des Einführungsdurchganges (14) erstreckt, **dadurch gekennzeichnet, daß** der Querschnitt des Meßdurchganges (16) im wesentlichen rund oder im wesentlichen rechteckig mit einem Seitenverhältnis im Bereich von 1 bis 10 ist.

4. Vorrichtung nach Anspruch 3, bei der die Probendüse (12a) einen Probenflußeinlaß (26) an ihrem Aufstromende hat und der Probenflußeinlaß (26) sich in mehrere Durchgänge (36) innerhalb der Probendüse verzweigt und dabei die Reihe der Abgabeöffnungen (30) bildet.

5. Vorrichtung nach Anspruch 4, bei der die Anzahl der Abgabeöffnungen (30) eine gerade Zahl ist und die Abgabeöffnungen (30) symmetrisch um den Probenflußeinlaß (26) angeordnet sind.

6. Vorrichtung nach Anspruch 3, 4 oder 5, bei der die Durchmesser der Abgabeöffnungen (30), die an den Enden der Reihe angeordnet sind, größer als die Durchmesser der Abgabeöffnungen (30), die in der Mitte der Reihe angeordnet sind, sind.

7. Vorrichtung zur Formung eines abgeflachten Probenflusses für Teilchenanalyse mit

    einer Strömungszelle (10) mit einem Einführungsdurchgang (14), der allmählich enger wird und in einen Meßdurchgang (16) führt, einer Hüllenflüssigkeitsbeschickungsöffnung (18), die in dem Einführungsdurchgang (14) angeordnet ist, und einer Abgabeöffnung (20), die an der Abstromseite des Meßdurchganges (16) angeordnet ist, und

    einer Probendüse (12) zur Abgabe einer Probe, wobei die Probendüse in dem Einführungsdurchgang (14) der Strömungszelle derart angeordnet ist, daß ihr Abstromende zu dem Meßdurchgang (16) hinblickt, wobei der Querschnitt des Meßdurchganges (16) im wesentlichen rund oder im wesentlichen rechteckig mit einem Seitenverhältnis im Bereich von 1 bis 10 ist,

    eine Hüllenflüssigkeitsaufteileinrichtung (13) sich quer zu dem Einführungsdurchgang (14) erstreckt, um die Hüllenflüssigkeit symmetrisch in zwei Ströme aufzuteilen, und in Nachbarschaft zu der Probendüse (12) angeordnet ist,

    eine Probenabgabeöffnung (22) in dem Abstromende der Probendüse (12) in dem Hüllenflüssigkeitskonvergierbereich an der Abstromseite der Hüllenflüssigkeitsaufteileinrichtung (13) angeordnet ist und

    die Abgabeöffnung (22) der Probendüse (12) länglich ist und die Probendüse (12) derart angeordnet ist, daß die Ausdehnungsrichtung der Abgabeöffnung (22) im wesentlichen die gleiche wie die Richtung der Quererstreckung der Hüllenflüssigkeitsaufteileinrichtung (13) ist.

8. Vorrichtung nach Anspruch 7, bei der die Abgabeöffnung (22) der Probendüse eine größere Breite an ihren Endabschnitten (28) als an ihrem Mittelabschnitt hat.

9. Vorrichtung zur Bildung eines abgeflachten Probenflusses für Teilchenanalyse mit

    einer Strömungszelle (10) mit einem Einführungsdurchgang (14), der allmählich enger wird und in einen Meßdurchgang (16) führt, einer Hüllenflüssigkeitsbeschickungsöffnung (18), die in dem Einführungsdurchgang (14) angeordnet ist, und einer Abgabeöffnung (20), die auf der Abstromseite des Meßdurchganges (16) angeordnet ist, und

    einer Probendüse (12a) zur Abgabe einer Probe, wobei die Probendüse in dem Einführungsdurchgang (14) der Strömungszelle derart angeordnet ist, daß ihr Abstromende für den Meßdurchgang (16) hinblickt,

    wobei der Querschnitt des Meßdurchganges (16) im wesentlichen rund oder im wesentlichen rechteckig mit einem Seitenverhältnis im Bereich von 1 bis 10 ist,

    eine Hüllenflüssigkeitsaufteileinrichtung (13) sich quer zu dem Einführungsdurchgang (14) erstreckt, um die Hüllenflüssigkeit symmetrisch in zwei Ströme aufzuteilen, und in Nachbarschaft zu der Probendüse (12a) angeordnet ist,

    mehrere Probenabgabeöffnungen (30) in einer Reihe in dem Abstromende der Probendüse (12a) angeordnet sind und in dem Hüllenflüssigkeitskonvergierbereich an der Abstromseite der Hüllenflüssigkeitsaufteileinrichtung (13) angeordnet sind und

    die Probendüse (12a) derart angeordnet ist, daß die Reihe der Abgabeöffnungen (30) sich im wesentlichen in der gleichen Richtung wie die Richtung der Quererstreckung der Hüllenflüssigkeitsaufteileinrichtung (13) erstreckt.

10. Vorrichtung nach Anspruch 9, bei der die Probendüse (12a) einen Probenflußeinlaß (26) an ihrem Aufstromende hat und der Probenflußeinlaß (26) sich in mehrere Durchgänge (36) im Inneren der Probendüse verzweigt und dabei die Reihe von Abgabeöffnungen (30) bildet.

**11.** Vorrichtung nach Anspruch 10, bei der die Anzahl von Abgabeöffnungen (30) eine gerade Zahl ist und die Abgabeöffnungen (30) symmetrisch um den Probenflußeinlaß (26) herum angeordnet sind.

**12.** Vorrichtung nach Anspruch 9, 10 oder 11, bei der die Durchmesser der Abgabeöffnungen (30), die an den Enden der Reihe angeordnet sind, größer als die Durchmesser der Abgabeöffnungen (30), die an der Mitte der Reihe angeordnet sind, sind.

**13.** Vorrichtung zur Bildung eines abgeflachten Probenflusses zur Teilchenanalyse mit

einer Strömungszelle (10) mit einem Einführungsdurchgang (14), der allmählich enger wird und in einen Meßdurchgang (16) führt, einer Hüllenflüssigkeitsbeschickungsöffnung (18), die in dem Einführungsdurchgang (14) angeordnet ist, und einer Abgabeöffnung (20), die an der Abstromseite des Meßdurchganges (16) angeordnet ist, und

einer Probendüse (40) zur Abgabe einer Probe, wobei die Probendüse sich quer zu dem Einführungsdurchgang (14) der Strömungszelle derart erstreckt, daß ihre Abstromstirnfläche zu dem Meßdurchgang (16) hinblickt, wobei

der Querschnitt des Meßdurchganges (16) im wesentlichen rund oder im wesentlichen rechteckig mit einem Seitenverhältnis im Bereich von 1 bis 10 ist,

mehrere Probenabgabeöffnungen (42) in einer Reihe in der Abstromstirnfläche der Probendüse (40) angeordnet sind, wobei die Reihe sich in der Axialrichtung der Probendüse erstreckt,

eine Hüllenflüssigkeitsaufteileinrichtung (13) sich quer zu dem Einführungsdurchgang (14) erstreckt und in Nachbarschaft zu der Aufstromstirnfläche der Probendüse (40) so angeordnet ist, daß die Hüllenflüssigkeit symmetrisch in zwei Ströme aufgeteilt wird, und

die Hüllenflüssigkeitsaufteileinrichtung (13) derart angeordnet ist, daß die Richtung der Quererstreckung der Hüllenflüssigkeitsaufteileinrichtung (13) im wesentlichen die gleiche wie die axiale Richtung der Probendüse (40) ist.

**14.** Vorrichtung zur Bildung eines abgeflachten Probenflusses zur Teilchenanalyse mit

einer Strömungszelle (10) mit einem Einführungsdurchgang (14), der allmählich enger wird und in einen Meßdurchgang (16) führt, einer Hüllenflüssigkeitsbeschickungsöffnung (18), die in dem Einführungsdurchgang (14) angeordnet ist, und einer Abgabeöffnung (20), die an der Abstromseite des Meßdurchganges (16) angeordnet ist, und

einer Probendüse (40) zur Abgabe einer Probe, wobei die Probendüse sich quer zu dem Einführungsdurchgang (14) der Strömungszelle derart erstreckt, daß ihre Abstromstirnfläche zu dem Meßdurchgang (16) hinblickt, wobei der Querschnitt des Meßdurchganges (16) im wesentlichen rund oder rechteckig mit einem Seitenverhältnis im Bereich von 1 bis 10 ist,

eine längliche Probenabgabeöffnung (44) in der Abstromstirnfläche der Probendüse (40) angeordnet ist und sich in der Axialrichtung der Probendüse erstreckt,

eine Hüllenflüssigkeitsaufteileinrichtung (13) sich quer zu dem Einführungsdurchgang (14) erstreckt und in Nachbarschaft zu der Aufstromstirnfläche der Probendüse (40) derart angeordnet ist, daß die Hüllenflüssigkeit symmetrisch in zwei Ströme aufgeteilt wird, und

die Hüllenflüssigkeitsaufteileinrichtung (13) derart angeordnet ist, daß die Richtung der Quererstreckung der Hüllenflüssigkeitsaufteileinrichtung (13) im wesentlichen die gleiche wie die Axialrichtung der Probendüse (40) ist.

**15.** Vorrichtung nach Anspruch 13 oder 14, bei der ein Probenflußdurchgang (26) axial durch die Probendüse (40) geht und in Verbindung mit der oder mit jeder Probenabgabeöffnung (42, 44) steht.

**Revendications**

**1.** Appareil pour former un flux d'échantillon disposé à plat pour l'analyse des particules, comprenant :

une cellule d'écoulement (10) ayant un passage d'entrée (14) qui devient progressivement plus étroit et conduit à un passage de mesure (16), un orifice (18) d'amenée de liquide formant une gaine, disposé dans le passage d'entrée (14), et un orifice d'évacuation (20) disposé en aval du passage de mesure (16) ; et une tuyère pour échantillon (12) destinée à évacuer un échantillon, ladite tuyère pour échantillon étant disposée dans le passage d'entrée (14) de la cellule d'écoulement de telle façon que son extrémité d'aval soit située en face du passage de mesure (16) ;

dans lequel :

la largeur du passage d'entrée (14) diminue progressivement seulement dans une direction ;

un orifice d'évacuation d'échantillon (22) à l'extrémité d'aval de la tuyère pour échantillon (12) est de forme allongée ; et

la tuyère pour échantillon (12) est disposée de telle façon que l'orifice d'évacuation de forme allongée (22) s'étende perpendiculairement à ladite direction unique de la largeur du passage d'entrée (14) ;

caractérisé en ce que la section transversale du passage de mesure (16) est pratiquement circulaire ou pratiquement rectangulaire avec un rapport des côtés compris entre 1 et 10.

2. Appareil selon la revendication 1, dans lequel l'orifice d'évacuation (22) de la tuyère pour échantillon est plus large dans ses parties terminales (28) que dans sa partie centrale.

3. Appareil pour former un flux d'échantillon disposé à plat pour l'analyse des particules, comprenant :

une cellule d'écoulement (10) ayant un passage d'entrée (14) qui devient progressivement plus étroit et conduit à un passage de mesure (16), un orifice (18) d'amenée de liquide formant une gaine, disposé dans le passage d'entrée (14), et un orifice d'évacuation (20) disposé en aval du passage de mesure (16) ; et

une tuyère pour échantillon (12a) destinée à évacuer un échantillon, ladite tuyère pour échantillon étant disposée dans le passage d'entrée (14) de la cellule d'écoulement de telle façon que son extrémité d'aval soit située en face du passage de mesure (16) ;

dans lequel :

la largeur du passage d'entrée (14) diminue progressivement seulement dans une direction ;

une pluralité d'orifices d'évacuation d'échantillon (30) est disposée en rangée à l'extrémité d'aval de la tuyère pour échantillon (12a) ; et

la tuyère pour échantillon (12a) est disposée de telle façon que la rangée d'orifices d'évacuation (30) s'étende perpendiculairement à ladite direction unique de la largeur du passage d'entrée (14) ;

caractérisé en ce que la section transversale du passage de mesure (16) est pratiquement circulaire ou pratiquement rectangulaire avec un rapport des côtés compris entre 1 et 10.

4. Appareil selon la revendication 3, dans lequel la tuyère pour échantillon (12a) a une entrée (26) pour le flux d'échantillon à son extrémité d'amont, et l'entrée (26) pour le flux d'échantillon se ramifie en une pluralité de passages (36) à l'intérieur de la tuyère pour échantillon, formant ainsi la rangée d'orifices d'évacuation (30).

5. Appareil selon la revendication 4, dans lequel le nombre d'orifices d'évacuation (30) est un nombre pair, et les orifices d'évacuation (30) sont disposés symétriquement autour de l'entrée (26) pour le flux d'échantillon.

6. Appareil selon la revendication 3, 4 ou 5, dans lequel les diamètres des orifices d'évacuation (30) disposés aux extrémités de la rangée sont plus grands que les diamètres des orifices d'évacuation (30) disposés au centre de la rangée.

7. Appareil pour former un flux d'échantillon disposé à plat pour l'analyse des particules, comprenant :

une cellule d'écoulement (10) ayant un passage d'entrée (14) qui devient progressivement plus étroit et conduit à un passage de mesure (16), un orifice (18) d'amenée de liquide formant une gaine, disposé dans le passage d'entrée (14), et un orifice d'évacuation (20) disposé en aval du passage de mesure (16) ; et

une tuyère pour échantillon (12) destinée à évacuer un échantillon, ladite tuyère pour échantillon étant disposée dans le passage d'entrée (14) de la cellule d'écoulement de telle façon que son extrémité d'aval soit située en face du passage de mesure (16)

dans lequel :

la section transversale du passage de mesure (16) est pratiquement circulaire ou pratiquement rectangulaire avec un rapport des côtés compris entre 1 et 10 ;

un moyen de division (13) du liquide formant une gaine s'étend perpendiculairement au passage d'entrée (14) pour diviser symétriquement en deux flux le liquide formant une gaine et est disposé de façon contiguë à la tuyère pour échantillon (12) ;

un orifice d'évacuation d'échantillon (22) à l'extrémité d'aval de la tuyère pour échantillon (12) est disposé dans la région de convergence du liquide formant une gaine, en aval du moyen (13) divisant ledit liquide formant une gaine ; et

l'orifice d'évacuation (22) de la tuyère pour échantillon (12) est de forme allongée, et la tuyère pour échantillon (12) est disposée de telle façon que la direction d'allongement de l'orifice d'évacuation (22) soit pratiquement la même que la direction de l'extension transversale du moyen (13) divisant le liquide formant une gaine.

8. Appareil selon la revendication 7, dans lequel l'orifice d'évacuation (22) de la tuyère pour échantillon (12) est plus large dans ses parties terminales (28) que dans sa partie centrale.

9. Appareil pour former un flux d'échantillon disposé à plat pour l'analyse des particules, comprenant :

une cellule d'écoulement (10) ayant un passage d'entrée (14) qui devient progressivement plus étroit et conduit à un passage de mesure (16), un orifice (18) d'amenée de liquide formant une gaine, disposé dans le passage d'entrée (14), et un orifice d'évacuation (20) disposé en aval du passage de mesure (16) ; et
une tuyère pour échantillon (12a) destinée à évacuer un échantillon, ladite tuyère pour échantillon étant disposée dans le passage d'entrée (14) de la cellule d'écoulement de telle façon que son extrémité d'aval soit située en face du passage de mesure (16) ;
dans lequel :
la section transversale du passage de mesure (16) est pratiquement circulaire ou pratiquement rectangulaire avec un rapport des côtés compris entre 1 et 10 ;
un moyen de division (13) du liquide formant une gaine s'étend perpendiculairement au passage d'entrée (14) pour diviser symétriquement en deux flux le liquide formant une gaine et est disposé de façon contiguë à la tuyère pour échantillon (12a) ;
une pluralité d'orifices d'évacuation d'échantillon (30) est disposée en rangée à l'extrémité d'aval de la tuyère pour échantillon (12a) et est disposée dans la région de convergence du liquide formant une gaine, en aval du moyen (13) divisant le liquide formant une gaine ; et
la tuyère pour échantillon (12a) est disposée de telle façon que la rangée d'orifices d'évacuation (30) s'étend pratiquement dans la même direction que la direction de l'extension transversale du moyen (13) divisant le liquide formant une gaine.

10. Appareil selon la revendication 9, dans lequel la tuyère pour échantillon (12a) a une entrée (26) pour le flux d'échantillon à son extrémité d'amont, et l'entrée (26) pour le flux d'échantillon se ramifie en une pluralité de passages (36) à l'intérieur de la tuyère pour échantillon, formant ainsi la rangée d'orifices d'évacuation (30).

11. Appareil selon la revendication 10, dans lequel le nombre d'orifices d'évacuation (30) est un nombre pair, et les orifices d'évacuation (30) sont disposés de façon symétrique autour de l'entrée (26) pour le flux d'échantillon.

12. Appareil selon la revendication 9, 10 ou 11, dans lequel les diamètres des orifices d'évacuation (30) disposés aux extrémités de la rangée sont plus grands que les diamètres des orifices d'évacuation (30) disposés au centre de la rangée.

13. Appareil pour former un flux d'échantillon disposé à plat pour l'analyse des particules, comprenant :

une cellule d'écoulement (10) ayant un passage d'entrée (14) qui devient progressivement plus étroit et conduit à un passage de mesure (16), un orifice (18) d'amenée de liquide formant une gaine, disposé dans le passage d'entrée (14), et un orifice d'évacuation (20) disposé en aval du passage de mesure (16) ; et
une tuyère pour échantillon (40) destinée à évacuer un échantillon, ladite tuyère pour échantillon s'étendant perpendiculairement au passage d'entrée (14) de la cellule d'écoulement, de sorte que sa face d'aval est située en face du passage de mesure (16) ;
dans lequel :
la section transversale du passage de mesure (16) est pratiquement circulaire ou pratiquement rectangulaire avec un rapport des côtés compris entre 1 et 10 ;
une pluralité d'orifices d'évacuation d'échantillon (42) est disposée en rangée sur la face d'aval de la tuyère pour échantillon (40), et ladite rangée s'étend dans la direction axiale de la tuyère pour échantillon ;
un moyen de division (13) du liquide formant une gaine s'étend perpendiculairement au passage d'entrée (14) et est disposé de façon contiguë à la face d'amont de la tuyère pour échantillon (40) de façon à diviser symétriquement en deux flux le liquide formant une gaine ; et
le moyen de division (13) du liquide formant une gaine est disposé de telle façon que la direction de l'extension transversale du moyen (13) divisant le liquide formant une gaine soit essentiellement la même que la direction axiale de la tuyère pour échantillon (40).

14. Appareil pour former un flux d'échantillon disposé à plat pour l'analyse des particules, comprenant :

une cellule d'écoulement (10) ayant un passage d'entrée (14) qui devient progressivement plus étroit et conduit à un passage de mesure (16), un orifice (18) d'amenée de liquide formant une gaine, disposé dans le passage d'entrée (14), et un orifice d'évacuation (20) disposé en aval du passage de mesure (16) ; et

une tuyère pour échantillon (40) destinée à évacuer un échantillon, ladite tuyère pour échantillon s'étendant perpendiculairement au passage d'entrée (14) de la cellule d'écoulement, de sorte que sa face d'aval est située en face du passage de mesure (16)

dans lequel :

la section transversale du passage de mesure (16) est pratiquement circulaire ou pratiquement rectangulaire avec un rapport des côtés compris entre 1 et 10 ;

un orifice allongé (44) pour l'évacuation de l'échantillon est disposé dans la face d'aval de la tuyère pour échantillon (40) et s'étend dans la direction axiale de la tuyère pour échantillon ;

un moyen de division (13) du liquide formant une gaine s'étend perpendiculairement au passage d'entrée (14) et est disposé de façon contiguë à la face d'amont de la tuyère pour échantillon (40) de façon à diviser symétriquement en deux flux le liquide formant une gaine ; et

le moyen de division (13) du liquide formant une gaine est disposé de telle façon que la direction de l'extension transversale du moyen (13) divisant le liquide formant une gaine soit essentiellement la même que la direction axiale de la tuyère pour échantillon (40).

15. Appareil selon la revendication 13 ou 14, dans lequel un passage (26) d'écoulement d'échantillon traverse axialement la tuyère pour échantillon (40) et communique avec l'orifice ou avec chaque orifice d'évacuation d'échantillon (42, 44).

FIG. I   PRIOR  ART

## FIG.2

SAMPLE
(LIQUID SPECIMEN)

SHEATH
LIQUID

18

14

12 (12a)

22 (30)

10

c

16

20

a1

## FIG.3

SAMPLE
(LIQUID SPECIMEN)

b1

18

18

12 (12a)

14

22(30)

10

16

c

20

b2

FIG.4

FIG.5

FIG.6

FIG.7

FIG.8

FIG.9

FIG.IO

FIG.11

FIG.12

FIG.13

FIG.14

FIG.15

## FIG.16

FIG.17

FIG.18

FIG.19   PRIOR ART

A

FIG.20

B

13

FIG.21

13

C

14

16

FIG.22    PRIOR ART

FIG.23

# FIG.24

**FIG. 25**

FIG.26

FIG.27

FIG.28

FIG.29

FIG.30

FIG.31

FIG.32